# FASCICULE DE BREVET EUROPEEN

(11) **EP 4 121 830 B1**
(45) Date de publication et mention de la délivrance du brevet: **28.08.2024**
(21) Numéro de dépôt: 21711893.4
(22) Date de dépôt: 17.03.2021
(51) Int. Cl.: G05B 23/02, B01D 3/42

(54) **PROCÉDÉ DE PRÉDICTION D'ENGORGEMENT(S) DE COLONNE(S) DE DISTILLATION D'UNE RAFFINERIE, PROGRAMME D'ORDINATEUR ET SYSTÈME DE PRÉDICTION ASSOCIÉ**
VERFAHREN ZUR VORHERSAGE DER VERSTOPFUNG VON DESTILLATIONSKOLONNE(N) IN EINER RAFFINERIE, COMPUTERPROGRAMM UND ZUGEHÖRIGES VORHERSAGESYSTEM
METHOD FOR PREDICTING CLOGGING OF DISTILLATION COLUMN(S) IN A REFINERY, COMPUTER PROGRAM AND ASSOCIATED PREDICTION SYSTEM

(30) Priorité: 18.03.2020 FR 2002636
(43) Date de publication de la demande: 25.01.2023
(73) Titulaire: TotalEnergies OneTech, 92400 Courbevoie (FR)
(72) Inventeur: GOURVENEC, Sébastien, 27680 SAINT SAMSON DE LA ROQUE (FR); CAHORS, Régis, 76430 SAINT AUBIN ROUTOT (FR)
(74) Mandataire: Lavoix
(86) Numéro de dépôt international: PCT/EP2021/056787
(87) Numéro de publication internationale: WO 2021/185889

(56) Documents cités:
- US-A1- 2002 116 079
- US-A1- 2008 082 295
- US-A1- 2018 275 690
- KHAIRIYAH MOHD. YUSOF ET AL: "Development of Neural Network Models for a Crude Oil Distillation Column", JURNAL TEKNOLOGI, 20 January 2012 (2012-01-20), Malaysia, XP055755960, ISSN: 0127-9696, DOI: 10.11113/jt.v38.509

## Description

La présente invention concerne un procédé de prédiction d'engorgement(s) d'au moins une colonne de distillation d'une raffinerie.

La présente invention concerne également un programme d'ordinateur comportant des instructions logicielles qui, lorsqu'elles sont exécutées par un ordinateur, mettent en oeuvre un tel procédé de prédiction.

La présente invention concerne également un système de prédiction d'engorgement(s) d'au moins une colonne de distillation d'une raffinerie mis en oeuvre par apprentissage automatique.

Le document US 2018/275690 A1 et le document US 2002/116079 A1 portent tous deux sur la surveillance du fonctionnement général d'une raffinerie, le document US 2018/275690 A1 divulgue notamment que les performances de la raffinerie, ou d'une unité de la raffinerie sont comparées aux performances prédites par un ou plusieurs modèles de processus pour identifier des différences ou les lacunes de fonctionnement.

Le document US 2008/082295 A1 porte sur un système et un procédé pour faciliter la surveillance et le diagnostic, en vue de prévention, de toute situation anormale dans un appareil de chauffage de cokéfaction d'une unité de cokéfaction dans un processus de raffinage de produit.

Cependant aucun de ces documents ne divulgue de solution dédiée spécifiquement à la surveillance de l'état de colonne(s) de distillation d'une raffinerie et en particulier à la prédiction d'engorgement d'une ou de plusieurs colonne(s) de distillation.

Les travaux de Khairiyah et al. dans l'article intitulé : « Development of Neural Networks Models for a Crude Oil Distillation Column » Jurnal Teknologi 20 janvier 2012 portent sur le développement d'un modèle de réseau de neurones artificiels pour optimiser le fonctionnement d'une colonne de distillation mais ne divulgue ni ne suggère de solution spécifique pour en prédire l'engorgement.

La présente invention concerne spécifiquement la surveillance de l'état de colonne(s) de distillation d'une raffinerie et en particulier la prédiction d'engorgement de ces colonnes.

La distillation est un procédé utilisé pour séparer ou purifier différentes substances liquides d'un mélange. Les engorgements de colonne de distillation se produisent lorsque le débit de vapeur au sein de la colonne est supérieur à un seuil de débit prédéterminé et qu'en conséquence le liquide ne peut plus s'écouler au travers de la colonne. De tels engorgement sont fréquents, en moyenne huit à neuf par mois pour une colonne de distillation atmosphérique par exemple, et dus à des causes diverses tel qu'un débit de vapeur et/ou un chauffage excessif, etc.

Classiquement de tel engorgements sont malheureusement détectés après leur apparition par une augmentation de la pression différentielle supérieure à un seuil prédéterminé et une diminution des performances de production, et une diminution de la qualité de séparation. Après engorgement, la stabilisation d'une colonne de distillation est lente, par exemple de l'ordre de huit heures pour une colonne de distillation atmosphérique, et pénalisante en termes de rentabilité.

Pour y remédier, il est nécessaire de prédire de tels engorgements afin de les anticiper et si possible de les éviter. Par exemple, pour parvenir à éviter l'engorgement d'une colonne de distillation atmosphérique, il est nécessaire de prédire au moins vingt minutes en avance la survenance d'un tel événement.

Des prédicteurs ont été jusqu'ici développés en utilisant des méthodes conventionnelles basées sur des équations théoriques telles que les équations développées à partir des travaux de H. Z. Kister et al. dans l'article intitulé « Predict Entrainment Flooding on Sieve and valve trays » Chemical engineering progress. 1990, Vol 86, Num 9, pp 63-69 pour un premier prédicteur de capacité, et/ou sur des analyses de température et de pression différentielle pour un deuxième prédicteur. Cependant de tels premier et deuxième prédicteurs, sont actuellement peu performants : le nombre de prédictions erronées (i.e. faux positifs prédisant un engorgement alors que le fonctionnement reste nominal) ou d'absences de prédiction (i.e. faux négatifs, un engorgement survient et n'a pas été prédit auparavant) restant trop important, et par ailleurs une prédiction erronée déclenchant un ralentissement coûteux du taux de production inutile pour éviter un engorgement impropre à se produire, alors que la survenance d'un engorgement non détecté ralentit, également de manière coûteuse, voire stoppe, simplement le fonctionnement de la colonne le temps de la re-stabiliser.

Le but de l'invention est de proposer un procédé et un système de prédiction qui permette, en comparaison avec les prédicteurs actuels, de diminuer les erreurs de prédiction correspondant à la somme des prédictions erronées (i.e. faux positifs) et des absences de prédiction (i.e. faux négatifs), et de mieux identifier des paramètre(s) ou caractéristique(s) de fonctionnement propres à déclencher un engorgement.

A cet effet l'invention a pour objet un procédé de prédiction du type précité, à savoir un procédé de prédiction d'engorgement(s) d'au moins une colonne de distillation d'une raffinerie mis en oeuvre par apprentissage automatique selon la revendication indépendante 1.

Le procédé de prédiction selon la présente invention est alors propre à améliorer en temps réel efficacement la prédiction d'engorgement d'une colonne de distillation, en se basant non plus sur un seul prédicteur mais sur une approche multicritères traitée par apprentissage automatique au moyen d'une succession d'étapes exécutées selon un ordre spécifique à la présente invention afin de construire en temps réel un ensemble de données pertinent pour traitement par un modèle d'apprentissage, le modèle d'apprentissage étant au préalable construit et entrainé à partir d'un ensemble de données précédemment collectées.

En particulier, l'étape de synchronisation des données suivie de l'étape de détermination et d'ajout d'au moins une valeur de variable courante représentative d'au moins une performance courante de ladite au moins une colonne, permettent, en synergie et selon cette séquence spécifique d'étapes, d'enrichir l'ensemble de données collecté en temps réel et d'affiner la prédiction d'engorgement mise en oeuvre par le modèle d'apprentissage.

La position de l'étape de synchronisation dans la séquence spécifique d'étapes selon la présente invention est notamment cruciale car elle permet de supprimer tout délai entre une cause et son effet tout en respectant la dynamique du processus de distillation mis en oeuvre au sein de la colonne considérée. Sans ce positionnement de l'étape de synchronisation au sein de la séquence spécifique d'étape selon la présente invention les données représentatives de cause ne sont pas correctement reliées à leur conséquence et les caractéristiques résultantes calculées ne sont pas significatives et pertinentes.

En effet, après évaluation des inventeurs, un tel procédé de prédiction d'engorgement(s) d'au moins une colonne de distillation d'une raffinerie permet, en comparaison des premier et deuxième prédicteurs actuels précités d'obtenir une performance d'efficacité de détection améliorée de 10 à 50%. Ainsi, la présente invention permet de mieux diagnostiquer à l'avance spécifiquement un risque d'engorgement d'au moins une colonne de distillation d'une raffine, ce qui n'est pas le but des documents précités US 2018/275690 A1, US 2002/116079 A1, US 2008/082265 A1 et des travaux de Khairiyah et al. dans l'article intitulé : « Development of Neural Networks Models for a Crude Oil Distillation Column » Jurnal Teknologi 20 janvier 2012, aucun de ces documents ne divulguant explicitement la prédiction d'engorgement de colonne de distillation, ni l'ordre spécifique et l'ensemble des étapes du procédé de prédiction d'engorgement(s) d'au moins une colonne de distillation d'une raffinerie selon la présente invention.

Suivant d'autres aspects avantageux de l'invention, le procédé de prédiction comprend une ou plusieurs des caractéristiques suivantes, prises isolément ou suivant toutes les combinaisons techniquement possibles :
- la phase de construction et d'entrainement d'un modèle d'apprentissage automatique de prédiction d'engorgement(s) comprend les étapes suivantes :
   - prétraitement de l'ensemble de données préalablement collectées par épuration et classification prédéterminées délivrant un ensemble préalable de données épurées et classées,
   - synchronisation des données temporelles de capture associées aux données collectées de l'ensemble préalable de données épurées et classées, délivrant un ensemble préalable de données épurées, classées et synchronisées,
   - à partir de l'ensemble préalable de données épurées, classées et synchronisées, détermination d'au moins une valeur de variable représentative d'au moins une performance préalable de ladite au moins une colonne de distillation, et ajout de ladite au moins une valeur de variable à l'ensemble préalable de données épurées, classées et synchronisées pour former un ensemble de données préalable à traiter,
   - régression dudit modèle d'apprentissage, par calcul et filtrage de dérivées prédéterminées de l'ensemble de données préalable à traiter, formant deux classes résultantes dudit modèle d'apprentissage respectivement associées à un fonctionnement normal de ladite au moins une colonne de distillation et à un pré-engorgement de ladite au moins une colonne de distillation,
   - ré-échantillonnage desdites deux classes résultantes dudit modèle d'apprentissage selon un taux d'échantillonnage prédéterminé,
   - détermination, entrainement et validation dudit modèle d'apprentissage en utilisant l'ensemble des échantillons issus de l'étape de ré-échantillonnage ;
- la synchronisation mise en oeuvre au sein de la phase de construction et d'entrainement d'un modèle d'apprentissage automatique de prédiction d'engorgement(s) et/ou mise en oeuvre au sein de la phase opérationnelle de prédiction d'engorgement(s) comprend l'application de décalage(s) temporel(s) déterminé(s) en fonction de la position de chaque capteur dudit ensemble de capteurs ;
- le modèle d'apprentissage est un modèle de forêts aléatoires comprenant un nombre d'estimateurs prédéterminé, et une profondeur maximale configurée pour étendre chaque noeud de la forêt aléatoire jusqu'à ce que toutes les feuilles soient pures ou jusqu'à ce que toutes les feuilles contiennent moins de deux échantillons ;
- la variable courante représentative d'au moins une performance courante et/ou la variable représentative d'au moins une performance préalable sont de type appartenant au groupe comprenant au moins :
   - une variation de débit brut au sein de ladite au moins une colonne de distillation,
   - une caractéristique d'engorgement correspondant à l'écart entre une consigne prédéterminée de débit de reflux et un débit de reflux mesuré et collecté au cours d'une étape de collecte de données associée à la phase opérationnelle ou à la phase de construction,
   - un indicateur de recirculation supérieure de ladite au moins une colonne de distillation correspondant au ratio du rapport liquide-vapeur sur le rapport de reflux du plateau d'aspiration, le rapport liquide-vapeur et le rapport de reflux étant mesuré et collecté au cours d'une étape de collecte de données associée à la phase opérationnelle ou à la phase de construction,
   - un indicateur de risque déterminé au moins à partir de données de température et de pression de ladite au moins une colonne de distillation mesurées et collectées au cours d'une étape de collecte de données associée à la phase opérationnelle ou à la phase de construction,
   - un indicateur d'engorgement obtenu à partir d'équations théoriques prédéterminées et un indicateur binaire associé,
   - un ensemble d'écarts et de rapports de température prédéterminés obtenus à partir d'au moins deux capteurs dudit ensemble de capteurs localisés en des positions distinctes par rapport à la position de ladite au moins une colonne de distillation,
   - un bilan de matière,
   - une enthalpie ;
- l'étape de prédiction associe à la valeur binaire une probabilité et dans lequel le procédé comprend en outre, après prédiction de l'état courant de ladite au moins une colonne de distillation, une étape de génération et de restitution d'alerte à au moins un opérateur localisé au sein de la raffinerie, en cas d'obtention au cours de l'étape de prédiction d'une valeur binaire représentative de la présence d'un pré-engorgement courant avec une valeur de probabilité associée supérieure à un seuil de probabilité prédéterminé ;
- le procédé de prédiction comprend en outre une étape de stockage des données du flux de données courant au sein de l'ensemble de données préalablement collectées pour une itération ultérieure de la phase de construction et d'entrainement du modèle d'apprentissage automatique de prédiction d'engorgement(s), mettant à jour ledit modèle d'apprentissage automatique pour une itération ultérieure de ladite phase opérationnelle de prédiction ;
- le procédé de prédiction comprend une étape de compression mise en oeuvre lors de la collecte d'un flux de données courant avec un taux de compression prédéterminé et une étape de vérification du maintien dudit taux de compression à chaque étape de collecte ultérieure.

L'invention a également pour objet un programme d'ordinateur comportant des instructions logicielles qui, lorsqu'elles sont exécutées par un ordinateur, mettent en oeuvre un procédé de surveillance de l'exécution d'une application sur un calculateur électronique tel que défini ci-dessus.

L'invention a également pour objet un système de prédiction d'au moins une colonne de distillation d'une raffinerie mis en oeuvre par apprentissage automatique selon la revendication indépendante 10.

Suivant un autre aspect avantageux de l'invention, le système de prédiction est tel que
- le module de collecte est localisé au sein même de la raffinerie, et
- l'unité de construction et d'entrainement préalables d'un modèle d'apprentissage automatique de prédiction d'engorgement(s), le tampon de donnée, le module de prétraitement, le module de synchronisation, le module de détermination, le module de formation et le module de prédiction de l'unité de prédiction d'engorgement(s), sont externes à la raffinerie et organisés en informatique en nuage,
le module de collecte étant en outre propre à charger directement le tampon de donnée, le système de prédiction comprenant en outre un module de réception propre à recevoir une information représentative de la prédiction de l'état courant de ladite au moins une colonne de distillation et restituable via un moyen de restitution dudit système de prédiction à au moins un opérateur présent au sein de la raffinerie..

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- [Fig 1] la figure 1 est une vue schématique des éléments matériels d'un système de prédiction selon la présente invention ;
- [Fig 2] la figure 2 est un organigramme d'un procédé de prédiction selon l'invention, le procédé étant mis en oeuvre par le système de prédiction de la figure 1.

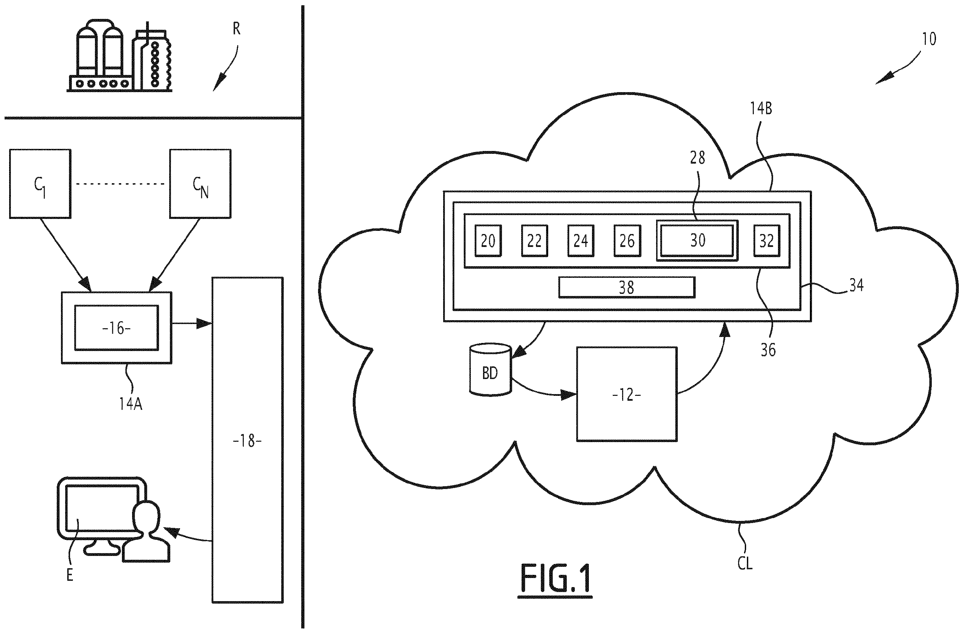

Sur la figure 1, un exemple d'architecture d'un système de prédiction 10 selon la présente invention est représenté. Selon cette architecture, le système de prédiction 10 selon l'invention est distribué sur deux parties distinctes à savoir d'une part au sein même d'une raffinerie R et d'autre part à distance, par exemple, au sein d'une informatique en nuage CL (de l'anglais *Cloud Computing*)*.*

Plus précisément, le système de prédiction d'engorgement(s) 10 d'au moins une colonne de distillation d'une raffinerie R mis en oeuvre par apprentissage automatique, comprend au moins une base de donnée BD ou un ensemble BD de bases de données organisées en informatique en nuage, une unité 12 de construction et d'entrainement préalables d'un modèle d'apprentissage automatique de prédiction d'engorgement(s) obtenu à partir d'un ensemble de données préalablement collectées stocké au sein de la base de donnée BD, et une unité 14 de prédiction d'engorgement(s).

Il est à noter que l'unité 12 de construction et d'entrainement préalables d'un modèle d'apprentissage automatique de prédiction d'engorgement(s) est le plus souvent à distance de la raffinerie, par exemple, de manière non représentée, intégrée au sein de l'ordinateur personnel d'un opérateur de la raffinerie, l'opérateur étant le cas échéant mobile et propre à se déplacer à l'intérieur comme à l'extérieur de la raffinerie, et une telle unité 12 n'est pas nécessairement intégrée directement au sein d'une informatique en nuage mais, par exemple, uniquement propre à communiquer avec elle.

Comme illustré par la figure 1, l'unité 14 de prédiction d'engorgement(s) est composée de deux parties une partie 14_{A} au sein même de la raffinerie R et une partie 14_{B} distribuée sur un ensemble de serveurs organisés en informatique en nuage CL.

Plus précisément, la base de donnée BD a été construite au préalable par stockage d'un ensemble de données préalablement collectées et obtenues au moyen d'un ensemble de capteurs C₁ à C_{N} répartis au sein de la raffinerie R (avec N un entier supérieur ou égal à un), notamment de l'ordre de mille capteurs par colonne de distillation de la raffinerie R avec par exemple un capteur de température en contact avec les parois d'une colonne de distillation considérée, un capteur de pression en contact avec les fluides circulant au sein des tuyaux de cette même colonne considérée. Par exemple, les capteurs C₁ à C_{N} mesurent plusieurs types de données au sein de la colonne de distillation considérée à savoir des températures, des pressions, des débits, ouvertures de vannes, etc. Ces données ont été archivées pendant de nombreuses années au sein de la base de données.

Selon un aspect particulier, l'unité 12 de construction et d'entrainement préalables d'un modèle d'apprentissage automatique de prédiction d'engorgement(s) est propre à extraire de la base de donnée un ensemble de données préalablement collectées au cours d'une période préalable prédéterminée et échantillonnées selon un taux d'échantillonnage prédéterminé, par exemple d'une minute (i.e. chaque donnée d'un même type de donnée étant associée à une donnée temporelle de capture, espacée de la précédente et de la suivante d'une minute).

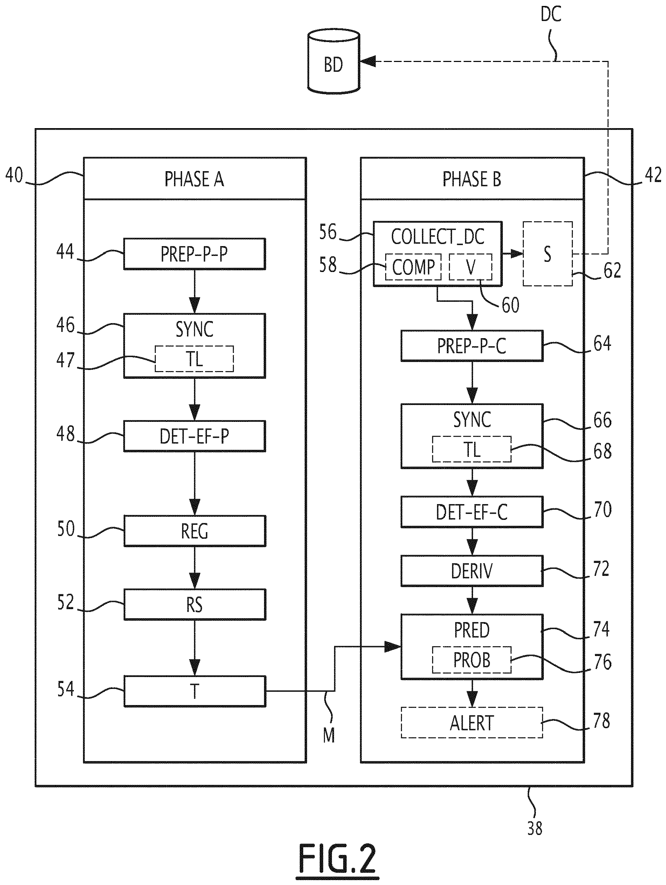

Le fonctionnement détaillé d'un telle unité 12 de construction et d'entrainement sera décrit par la suite en relation avec la figure 2.

L'unité de prédiction d'engorgement(s) composée des deux parties 14_{A} et 14_{B} comprend plus précisément, dans la partie 14_{A} localisée au sein même de la raffinerie R, un module de collecte 16 configuré pour collecter, à partir de l'ensemble de capteurs C₁ à C_{N} de la raffinerie, un flux de données courant jusqu'à remplissage d'un tampon de données (i.e. de l'anglais *buffer*) de taille prédéterminée non représenté, chaque donnée du flux de données courant étant également associée à une donnée temporelle de capture.

Selon une première variante, le tampon de données est rempli au sein même de la raffinerie R puis transmis une fois rempli via un module d'émission-réception 18 de la raffinerie R vers un module de réception non représenté de l'ensemble de serveurs organisés en informatique en nuage CL.

A titre d'alternative, le tampon est directement localisé sur un des serveurs organisés en informatique en nuage CL, et le module de collecte 16 est configuré pour le remplir en temps réel via le module d'émission-réception 18 de la raffinerie R.

Selon un aspect particulier, le module d'émission-réception 18 de la raffinerie R est uniquement dédié au système de prédiction 10 selon la présente invention. Dans ce cas le système de prédiction 10 selon la présente invention comprend un tel module d'émission-réception 18 dédié, et selon une variante non représentée un tel module d'émission-réception 18 est également directement intégré au sein la partie 14_{A} de l'unité de prédiction d'engorgement(s).

Selon un aspect particulier, un tel module de collecte est également propre à alimenter au préalable la base de donnée BD.

L'unité de prédiction d'engorgement(s) comprend en outre, dans la partie 14_{B} localisée au sein de l'informatique en nuage CL, un module de prétraitement 20 configuré pour prétraiter les données du tampon de données par épuration et classification prédéterminées, et délivrant un ensemble courant de données épurées et classées. Autrement dit, le module de prétraitement 20 présente une entrée connectée au tampon de donnée.

L'unité de prédiction d'engorgement(s) comprend en outre, dans la partie 14_{B} localisée au sein de l'informatique en nuage CL, un module de synchronisation 22 configuré pour synchroniser les données temporelles de capture associées aux données du flux de données courant collecté de l'ensemble courant de données épurées et classées, et délivrant un ensemble courant de données épurées, classées et synchronisées. Autrement dit, le module de synchronisation 22 présente une entrée connectée à la sortie du module de prétraitement 20.

L'unité de prédiction d'engorgement(s) comprend en outre, dans la partie 14_{B} localisée au sein de l'informatique en nuage CL, un module de détermination 24 configuré pour déterminer, à partir de l'ensemble courant de données épurées, classées et synchronisées, au moins une valeur de variable courante représentative d'au moins une performance courante de ladite au moins une colonne de distillation, et pour ajouter ladite au moins une valeur de variable à l'ensemble courant de données épurées, classées et synchronisées pour former un ensemble courant de données à traiter. Autrement dit, le module de détermination 24 présente une entrée connectée à la sortie du module de synchronisation 22.

L'unité de prédiction d'engorgement(s) comprend également, dans la partie 14_{B} localisée au sein de l'informatique en nuage CL, un module de formation 26 configuré pour former un ensemble courant de données transformées par calcul de dérivées prédéterminées de l'ensemble courant de données à traiter. Autrement dit, le module de formation 26 présente une entrée connectée à la sortie du module de détermination 24.

L'unité de prédiction d'engorgement(s) comprend également, dans la partie 14_{B} localisée au sein de l'informatique en nuage CL, un module de prédiction 28 configuré pour prédire l'état courant de ladite au moins une colonne de distillation par application du modèle d'apprentissage à l'ensemble courant de données transformées, l'état courant correspondant à une valeur binaire représentative de la présence ou absence d'un pré-engorgement courant. Autrement dit, le module de prédiction 28 présente une entrée connectée à la sortie du module de formation 26.

En complément facultatif, le module de prédiction 28 comprend un outil de calcul 30 configuré pour calculer une probabilité (i.e. un indice de confiance) d'engorgement et pour le comparer à un seuil de probabilité prédéterminé pour obtenir la valeur binaire représentative de la présence ou absence d'un pré-engorgement courant, et un module 32 de génération d'alerte en cas d'obtention au cours de l'étape de prédiction d'une valeur binaire représentative de la présence d'un pré-engorgement courant avec une valeur de probabilité associée supérieure à un seuil de probabilité prédéterminé.

Selon un autre aspect particulier facultatif, le système de prédiction 10 comprend en outre un module de réception, par exemple le module d'émission-réception 18 illustré par la figure 1, propre à recevoir une information représentative de la prédiction de l'état courant de ladite au moins une colonne de distillation et restituable via un moyen de restitution E du système de prédiction 10 à au moins un opérateur présent au sein de la raffinerie.

En particulier, une telle information représentative correspond par exemple directement à une alerte générée par le module optionnel 32 de génération d'alerte.

Selon un aspect particulier, la partie 14_{B} localisée au sein de l'informatique en nuage CL est en outre configurée pour stocker les données du flux de données courant au sein de l'ensemble de données préalablement collectées de la base de données BD pour une itération ultérieure de la phase de construction et d'entrainement du modèle d'apprentissage automatique de prédiction d'engorgement(s) mise en oeuvre par l'unité de construction et d'entrainement 12, mettant à jour ledit modèle d'apprentissage automatique pour une itération ultérieure de ladite phase opérationnelle de prédiction

Dans l'exemple de la figure 1, la partie 14_{B} localisée au sein de l'informatique en nuage CL de L'unité de prédiction d'engorgement(s) comprend une ou plusieurs unité(s) de traitement d'informations 34, formée(s) par exemple d'une mémoire 36 associée à un processeur 38 tel qu'un processeur de type CPU (de l'anglais *Central Processing Unit*)*.*

Dans l'exemple de la figure 1, le module de prétraitement 20, le module de synchronisation 22, le module de détermination 24, le module de formation 26, le module de prédiction 28 et optionnellement les modules de calcul 30 et de génération 32 sont réalisés chacun sous forme d'un logiciel exécutable par le processeur 38.

La mémoire 36 de l'unité de traitement d'informations 34 est alors apte à stocker un logiciel de prétraitement configuré pour prétraiter les données du tampon de données (transmis par le module d'émission réception 18 de la raffinerie R, ou selon une variante non représentée le tampon directement stocké au sein de la mémoire 36) par épuration et classification prédéterminées délivrant un ensemble courant de données épurées et classées. La mémoire 36 de l'unité de traitement d'informations 34 est également apte à stocker un logiciel de synchronisation configuré pour synchroniser les données temporelles de capture associées aux données du flux de données courant collecté de l'ensemble courant de données épurées et classées, délivrant un ensemble courant de données épurées, classées et synchronisées, un logiciel de détermination configuré pour déterminer, à partir de l'ensemble courant de données épurées, classées et synchronisées, au moins une valeur de variable courante représentative d'au moins une performance courante de ladite au moins une colonne de distillation, et pour ajouter ladite au moins une valeur de variable à l'ensemble courant de données épurées, classées et synchronisées pour former un ensemble courant de données à traiter, un logiciel de formation configuré pour former un ensemble courant de données transformées par calcul de dérivées prédéterminées de l'ensemble courant de données à traiter, un logiciel de prédiction configuré pour prédire l'état courant de ladite au moins une colonne de distillation par application dudit modèle d'apprentissage audit ensemble courant de données transformées, ledit état courant correspondant à une valeur binaire représentative de la présence ou absence d'un pré-engorgement courant. Optionnellement, la mémoire 36 de l'unité de traitement d'informations comprend également un logiciel de calcul d'une probabilité (i.e. un indice de confiance) associée à la valeur binaire représentative de la présence ou absence d'un pré-engorgement courant et un logiciel de génération d'alerte en cas d'obtention au cours de l'étape de prédiction d'une valeur binaire représentative de la présence d'un pré-engorgement courant avec une valeur de probabilité associée supérieure à un seuil de probabilité prédéterminé.

Le processeur 38 est alors apte à exécuter, en série, le logiciel de prétraitement, le logiciel de synchronisation, le logiciel de détermination, le logiciel de formation, le logiciel de prédiction et optionnellement le logiciel de calcul et le logiciel de génération d'alerte.

En variante non représentée, le module de prétraitement 20, le module de synchronisation 22, le module de détermination 24, le module de formation 26, le module de prédiction 28 et optionnellement les modules de calcul 30 et de génération 32 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*)*.*

Lorsqu'au moins une partie du système de prédiction 10 est réalisée sous forme d'un ou plusieurs logiciels, c'est-à-dire sous forme d'un programme d'ordinateur, elle est en outre apte à être enregistrée sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le fonctionnement du système de prédiction 10 va désormais être expliqué à l'aide de la figure 2 représentant un organigramme d'un procédé 38 de prédiction d'engorgement(s) d'au moins une colonne de distillation d'une raffinerie mis en oeuvre par apprentissage automatique.

Un tel procédé 38 comprend deux phases 40 et 42 distinctes, à savoir d'une part une phase A de construction et d'entrainement d'un modèle M d'apprentissage automatique de prédiction d'engorgement(s) obtenu à partir d'un ensemble de données préalablement collectées, au cours d'une période préalable prédéterminée, et au moins à partir d'un ensemble de capteurs de la raffinerie, chaque donnée collectée étant associée à une donnée temporelle de capture mise en oeuvre par l'unité 12 de construction et d'entrainement préalables d'un modèle d'apprentissage automatique de prédiction d'engorgement(s), et une phase B opérationnelle de prédiction d'engorgement(s) mise en oeuvre en temps réel par l'unité 14 de prédiction d'engorgement(s).

La phase, dite A, de construction et d'entrainement 40 d'un modèle M d'apprentissage automatique est nécessairement mise en oeuvre avant la phase, dite B de prédiction d'engorgement(s) en tant que tel car la phase A fournit le modèle d'apprentissage M à la phase d'engorgement mis en oeuvre en temps réel.

Plus précisément, la phase de construction et d'entrainement 40 d'un modèle M d'apprentissage automatique de prédiction d'engorgement comprend une succession d'étapes selon un ordre spécifique à la présente invention et comprend une première étape 44 de prétraitement PREP-P-P de l'ensemble de données préalablement collectées et notamment stocké au sein de la base de donnée BD, et ce par épuration et classification prédéterminées délivrant un ensemble préalable de données épurées et classées.

En particulier, un tel prétraitement consiste notamment à :
- convertir le format sous lequel les données ont été préalablement collectées, par exemple d'un format tabulaire Excel en trame de données selon un format adapté au langage Python au moyen de la bibliothèque pandas, puis
- sous cette forme convertie, filtrer les valeurs collectées en identifiant puis en supprimant des valeurs aberrantes car doubles voire redondantes ou encore constantes et donc non pertinente pour déterminer un engorgement, ce qui permet de réduire de 30 à 40% le nombre de données à traiter, puis
- nettoyer et un classer les données issues du filtrage en mettant en oeuvre successivement les sous-étapes suivantes :
   - premier remplacement des chaines de caractères par le terme NaN (de l'anglais *not a number*) lorsque des valeurs numériques sont attendues par le modèle d'apprentissage, puis
   - classement des données issues du premier remplacement en cinq classes, à savoir :
      - une classe de données associées à un état hors fonctionnement,
      - une classe de données associées à un état de pré-engorgement regroupant toutes les données collectées pendant, par exemple, soixante minutes précédant un engorgement en tant que tel,
      - une classe de données associées à un état de post-engorgement regroupant toutes les données collectées pendant, par exemple, les huit heures qui ont suivie un engorgement en tant que tel,
      - une classe de données associées à un état d'engorgement regroupant toutes les données collectées pendant l'engorgement en tant que tel,
      - une classe comprenant toutes les données restantes n'appartenant à aucune des quatre classes précédentes et donc représentatives d'un fonctionnement normal de la colonne,
   - dans chacune des cinq classes, un deuxième remplacement des termes NaN au moyen d'un « remplissage en avant » (de l'anglais *forward-filling*) dans lequel la valeur numérique manquante NaN est remplie à partir de la valeur correspondante dans la ligne précédente, et
   - mise à zéro des colonnes ne contenant que des valeurs nulles,
- mémoriser ces trames de données nettoyées et classées en utilisant un format de stockage adapté permettant de réduire la taille des données collectée, par exemple en utilisant l'outil Pickle de Python propre à implémenter des protocoles binaires pour sérialiser et dé-sérialiser une structure d'objet Python.

Plus précisément, l'état d'engorgement en tant que tel est par exemple détecté en présence d'une donnée collectée indiquant que la colonne de distillation considérée est en état de marche (et non à l'arrêt) et en fonction de la valeur mesurée du niveau de débit contrôlé du séparateur triphasé du condenseur de la colonne. Par exemple l'état d'engorgement est détecté en présence d'un triplet de conditions à savoir que :
- la colonne de distillation considérée est en état de marche (i.e. en fonctionnement effectif), et que
- la différence entre la valeur mesurée collectée du niveau de débit et la valeur de consigne du niveau de débit est supérieure à dix, et que
- la valeur de sortie d'un contrôleur de niveau de débit de la colonne considérée est supérieure à soixante-dix.

Lorsque ces trois conditions sont réunies un engorgement est détecté et la donnée temporelle de capture associée à la valeur mesurée du niveau de débit est utilisée pour le classement :
- regroupant toutes les données collectées associées à la même donnée temporelle de capture, dans la classe de données associées à un état d'engorgement,
- regroupant toutes les données collectées associées à une donnée temporelle de capture précédant au maximum, par exemple, de soixante minutes, la donnée temporelle de capture associée à la valeur mesurée du niveau de débit, dans la classe de données associées à un état de pré-engorgement,
- regroupant toutes les données collectées associées à une donnée temporelle de capture succédant au maximum, par exemple, de huit heures, la donnée temporelle de capture associée à la valeur mesurée du niveau de débit, dans la classe de données associées à un état de post-engorgement.

Selon un aspect pratique particulier, le classement consiste à affecter une valeur représentative de l'une des cinq classes précitées, à savoir classe « hors fonctionnement (i.e. à l'arrêt) », « pré-engorgement », « engorgement », « post-engorgement », « non pertinente », à la variable représentative de la classe, par exemple nommée FI, de chaque donnée collectée.

La phase de construction et d'entrainement 40 d'un modèle M d'apprentissage automatique de prédiction d'engorgement comprend une deuxième étape 46 de synchronisation SYNC des données temporelles de capture associées aux données collectées de l'ensemble préalable de données épurées et classées, délivrant un ensemble préalable de données épurées, classées et synchronisées.

En particulier, la synchronisation 46 mise en oeuvre au sein de la phase 40 de construction et d'entrainement du modèle d'apprentissage automatique M de prédiction d'engorgement(s) comprend l'application 47 de décalage(s) temporel(s) TL déterminé(s) en fonction de la position de chaque capteur dudit ensemble de capteurs C₁ à C_{N}.

Plus précisément, ces décalages temporels correspondent à des retards dans la réponse du processus de distillation à des conditions changeantes, tel que par exemple un retard dû à un changement de l'état de la matière première à un endroit particulier de la colonne de distillation. Par exemple, le décalage temporel à appliquer aux données collectées par le capteur C₁ dépend de la distance entre ce capteur C₁ et la position du point d'engorgement de la colonne de distillation, ladite position étant connue et constante pour une colonne de distillation et une application données. De tels décalage(s) temporel(s) sont déterminés automatiquement à partir de la connaissance du processus de distillation mis en oeuvre au sein de la colonne de distillation considérée et confirmés par une approche d'information mutuelle basée sur les travaux de O. Ludwig et al. dans l'article intitulé « Applications of information theory, genetic algorithms, and neural models to predict oil flow » CNSNS 14 (2009) 2870-2885.

Une telle synchronisation 46 consiste en particulier à récupérer les valeurs de décalage(s) temporel(s) TL déterminés automatiquement puis à les appliquer 47 aux données temporelles de capture associée aux données collectées.

A partir de l'ensemble préalable de données épurées, classées et synchronisées, la phase de construction et d'entrainement 40 d'un modèle M d'apprentissage automatique de prédiction d'engorgement comprend une troisième étape 48 de détermination DET-EF-P d'au moins une valeur de variable représentative d'au moins une performance préalable de ladite au moins une colonne de distillation, et d'ajout de ladite au moins une valeur de variable à l'ensemble préalable de données épurées, classées et synchronisées pour former un ensemble de données préalable à traiter.

Plus précisément, la variable représentative d'au moins une performance préalable est de type appartenant au groupe comprenant au moins :
- une variation de débit brut au sein de ladite au moins une colonne de distillation,
- une caractéristique d'engorgement correspondant à l'écart entre la valeur mesurée collectée, au cours d'une étape de collecte de données associée à la phase opérationnelle ou à la phase de construction, du niveau de débit et la valeur de consigne du niveau de débit contrôlé du séparateur triphasé du condenseur de la colonne,
- un indicateur de recirculation supérieure de ladite au moins une colonne de distillation correspondant au ratio du rapport liquide-vapeur sur le rapport de reflux du plateau d'aspiration, le rapport liquide-vapeur et le rapport de reflux étant mesuré et collecté au cours d'une étape de collecte de données associée à la phase opérationnelle ou à la phase de construction,
- un indicateur de risque déterminé au moins à partir de données de température et de pression de ladite au moins une colonne de distillation mesurées et collectées au cours d'une étape de collecte de données associée à la phase opérationnelle ou à la phase de construction,
- un indicateur d'engorgement obtenu à partir d'équations théoriques prédéterminées, tel que le premier prédicteur de capacité précité et un indicateur binaire associé,
- un ensemble d'écarts et de rapports de température prédéterminés obtenus à partir d'au moins deux capteurs dudit ensemble de capteurs localisés en des positions distinctes par rapport à la position de ladite au moins une colonne de distillation,
- un bilan de matière,
- une enthalpie.

Autrement dit, cette variable représentative d'au moins une performance préalable ou préférentiellement l'ensemble des variables citées ci-dessus sont calculées en utilisant des équations d'ingénierie sur mesure prédéterminées, propres à chaque type de colonne de distillation, et pertinentes dans le domaine industriel de la détermination d'engorgement au sein de colonne de distillation de raffinerie, et ce pour chaque donnée temporelle de capture, et à partir des données collectées à l'instant temporel associé à la donnée temporelle de capture considérée. Ainsi chaque classe de l'ensemble préalable de données épurées, classées et synchronisées est enrichie par ces variables représentatives de performance pour faciliter la modélisation d'un engorgement.

Il est à noter que selon la présente invention une telle étape d'enrichissement est mise spécifiquement en oeuvre après synchronisation ce qui permet d'utiliser dans chaque équation d'ingénierie d'obtention d'une des variables précitée les données collectées qui présentent la même donnée temporelle de capture après synchronisation et d'éviter un biais de calcul de ces variables d'enrichissement représentatives d'au moins une performance préalable de la colonne de distillation.

La phase de construction et d'entrainement 40 d'un modèle M d'apprentissage automatique de prédiction d'engorgement comprend en outre une quatrième étape 50 de régression REG du modèle d'apprentissage M, par calcul et filtrage de dérivées prédéterminées de l'ensemble de données préalable à traiter, formant deux classes résultantes dudit modèle d'apprentissage respectivement associées à un fonctionnement normal de ladite au moins une colonne de distillation et à un pré-engorgement de ladite au moins une colonne de distillation.

Plus précisément, un tel calcul et filtrage de dérivées prédéterminées de l'ensemble, selon la présente invention, de données préalable à traiter consiste à déterminer un gradient calculé en utilisant d'une part des différences centrales précises du deuxième ordre appliquées à un sous-ensemble intérieur dudit ensemble de données préalable à traiter (autrement dit appliquées à des points intérieurs prédéterminés de cet ensemble), et d'autre part des différences unilatérales précises du premier ou du second ordre (vers l'arrière ou vers l'avant) aux données dudit ensemble de données préalable à traiter localisées hors du sous-ensemble intérieur, de sorte que le gradient obtenu présente une forme similaire à celle de l'ensemble de données préalable à traiter utilisé en entrée. Il est à noter qu'un tel calcul n'est pas appliqué à l'indicateur binaire associé au premier prédicteur de capacité ni à la variable représentative de la classe, par exemple nommée FI.

Autrement dit selon cette étape 50 les cinq classes obtenues et enrichies jusqu'à l'étape précédente 48 sont réduites à deux classes résultantes uniques FI associées chacune à une valeur binaire distincte à savoir, par exemple, d'une part FI = 0 pour la classe associée à un fonctionnement normal, et FI = 1 pour la classe associée à un pré-engorgement.

La phase de construction et d'entrainement 40 d'un modèle M d'apprentissage automatique de prédiction d'engorgement comprend en outre une cinquième étape 52 de ré-échantillonnage RS desdites deux classes résultantes FI associées respectivement à un fonctionnement normal (FI=0) d'une part et à un pré-engorgement (Fl=1) d'autre part dudit modèle d'apprentissage M selon un taux d'échantillonnage prédéterminé.

En effet, ces deux classes résultantes sont déséquilibrées en termes de tailles, la taille de la classe associée au fonctionnement normal étant largement supérieure à celle de la classe associée au pré-engorgement car la fréquence d'un engorgement est par exemple en moyenne de huit fois par mois. Pour ce faire plusieurs rapports d'échantillonnage entre ces deux classes résultantes sont par exemple testés au cours de l'étape 52 afin de fournir les meilleurs résultats, tel que le rapport 10:1 où la classe associée au fonctionnement normal présente dix fois plus d'échantillons que celle associée au pré-engorgement, le rapport 5:1, le rapport 5:5 et le rapport 5:10. Préférentiellement, le rapport le rapport 5:5 où classe associée au fonctionnement normal présente autant d'échantillons que celle associée au pré-engorgement est utilisé selon la présente invention lors de cette étape 52 de ré-échantillonnage.

La phase de construction et d'entrainement 40 d'un modèle M d'apprentissage automatique de prédiction d'engorgement comprend en outre une sixième étape 54 de détermination, d'entrainement et de validation T dudit modèle d'apprentissage M en utilisant l'ensemble des échantillons issus de l'étape de ré-échantillonnage.

Selon un aspect particulier, au cours de cette étape 54 la détermination du modèle d'apprentissage est menée en utilisant une approche de validation croisée en divisant notamment l'ensemble des échantillons issus de l'étape de ré-échantillonnage en deux sous-ensembles disjoints l'un dédié à l'entrainement et l'autre à la validation du modèle d'apprentissage M. Le sous-ensemble dédié à l'entrainement est par ailleurs subdivisé en un nombre prédéterminé de sous-ensembles disjoints de validation croisée et, par exemple, traité au moyen d'une technique par fenêtre glissante pour série de données temporelles utilisant notamment des pas d'échantillons précédents pour prédire par décalage des pas d'échantillons suivants.

La détermination du modèle d'apprentissage M le plus performant pour prédire les engorgements passés associés à l'ensemble de données préalablement collectées est effectuée selon la présente invention au sein d'une liste de type de modèles prédéterminés présentent un degré d'interprétabilité supérieur à un seuil d'interprétabilité requis et prédéterminé. Par exemple une telle liste comprend les types de modèles suivants : de régression logistique, d'arbres de décision, de forêts aléatoires, de réseaux neuronaux artificiels et de machine à vecteurs de support, etc.

La performance de chaque modèle de cette liste est mesurée à l'aide de l'aire AUC sous la courbe ROC (de l'anglais *Receiver Operating Characteristic*) représentant les performances d'un modèle de classification pour tous les seuils de classification, et trace le taux de vrais positifs (engorgement effectifs) en fonction du taux de faux positifs (faux engorgements).

Par exemple, pour une colonne de distillation atmosphérique par exemple à la raffinerie de Donges en France, le modèle d'apprentissage M le plus performant est un modèle de forêts aléatoires comprenant un nombre d'estimateurs prédéterminé et une profondeur maximale configurée pour étendre chaque noeud de la forêt aléatoire jusqu'à ce que toutes les feuilles soient pures ou jusqu'à ce que toutes les feuilles contiennent moins de deux échantillons.

Ainsi, par l'ensemble des étapes précitées 44 à 54, la phase de de construction et d'entrainement d'un modèle d'apprentissage automatique permet de déterminer, d'entrainer et de valider le modèle d'apprentissage M le plus performant à utiliser pour une prédiction en temps réel d'une situation de « pré-engorgement » ce qui est l'originalité de la présente invention qui prédit un le phénomène de « pré-engorgement » précédant d'environ soixante minutes l'engorgement, et non un engorgement effectif ne permettant plus à un opérateur d'agir pour inverser le processus et éviter l'engorgement.

Sur la figure 2, phase B opérationnelle 42 de prédiction d'engorgement(s) mise en oeuvre en temps réel par l'unité 14 de prédiction d'engorgement(s) comprend alors les étapes suivantes mises en oeuvre en temps réel.

Selon une première étape 56 le module de collecte 16 de l'unité 14 de prédiction d'engorgement(s) collecte COLLECT_DC un flux de données courant DC jusqu'à remplissage d'un tampon de données de taille prédéterminée, chaque donnée du flux de données courant étant également associée à une donnée temporelle de capture.

En particulier, selon un aspect complémentaire optionnel, une telle collecte COLLECT_DC comprend une étape 58 de compression COMP avec un taux de compression prédéterminé préférentiellement mémorisé, par exemple d'une donnée par minute, et une étape 60 de vérification V du maintien dudit taux de compression à chaque étape 56 de collecte ultérieure. Une telle compression permet de maintenir la qualité de données collectées nécessaire à un entrainement ultérieur performant du modèle d'apprentissage M.

En particulier, selon un autre aspect complémentaire optionnel, la collecte 56 est suivie d'une étape 62 de stockage S des données du flux de données courant DC au sein de l'ensemble de données préalablement collectées au sein de la base de données BD pour une itération ultérieure de la phase de construction et d'entrainement 40 du modèle M d'apprentissage automatique de prédiction d'engorgement(s), mettant à jour ledit modèle d'apprentissage automatique pour une itération ultérieure de ladite phase 42 opérationnelle de prédiction. La phase de construction et d'entrainement 40 du modèle M d'apprentissage automatique de prédiction d'engorgement(s) est par exemple réitérée, pour mise à jour, au bout d'un nombre prédéterminé d'engorgements effectifs.

Puis selon une étape 64, phase B opérationnelle 42 de prédiction d'engorgement(s) mise en oeuvre en temps réel par l'unité 14 de prédiction d'engorgement(s) comprend un prétraitement PREP-P-C des données du tampon de données par épuration et classification prédéterminées délivrant un ensemble courant de données épurées et classées similairement à ce qui est mis en oeuvre lors de la phase de construction et d'entrainement 40 d'un modèle M d'apprentissage automatique avec des données préalablement collectées.

Une étape 66 de synchronisation SYNC succède également à l'étape 64 de prétraitement comme mis en oeuvre lors de la phase de construction et d'entrainement 40 d'un modèle M d'apprentissage automatique avec des données préalablement collectées mais cette fois en appliquant une telle synchronisation sur les données temporelles de capture associées aux données du flux de données courant collecté de l'ensemble courant de données épurées et classées, délivrant un ensemble courant de données épurées, classées et synchronisées.

De la même manière qu'effectué lors de la phase de construction et d'entrainement 40, une telle synchronisation 66 comprend l'application 68 de décalage(s) temporel(s) TL déterminé(s) en fonction de la position de chaque capteur dudit ensemble de capteurs C₁ à C_{N}.

Puis selon une étape 70, à partir de l'ensemble courant de données épurées, classées et synchronisées, la détermination DET-EF-C d'au moins une valeur de variable courante représentative d'au moins une performance courante de ladite au moins une colonne de distillation est mise en oeuvre, et ajoutée à l'ensemble courant de données épurées, classées et synchronisées pour former un ensemble courant de données à traiter.

Selon une étape 72, la formation d'un ensemble courant de données transformées est mis en oeuvre par calcul de dérivées DERIV prédéterminées de l'ensemble courant de données à traiter.

Enfin, selon une étape 74, la prédiction de l'état courant de ladite au moins une colonne de distillation par application dudit modèle d'apprentissage M audit ensemble courant de données transformées est mise en oeuvre, ledit état courant correspondant à une valeur binaire représentative de la présence ou absence d'un pré-engorgement courant.

En particulier, selon un aspect complémentaire optionnel, l'étape 74 de prédiction détermine une probabilité PROB et la compare à un seuil de probabilité prédéterminé au cours d'une étape 76 pour obtenir la valeur binaire représentative de la présence ou absence d'un pré-engorgement courant.

La phase B opérationnelle 42 de prédiction d'engorgement(s) mise en oeuvre en temps réel par l'unité 14 de prédiction d'engorgement(s) comprend en outre, après prédiction 74 de l'état courant de ladite au moins une colonne de distillation, une étape 78 de génération et de restitution d'alerte ALERT à au moins un opérateur localisé au sein de la raffinerie R notamment vi l'écran E, en cas d'obtention au cours de l'étape de prédiction 74 d'une valeur binaire représentative de la présence d'un pré-engorgement courant avec une valeur de probabilité associée supérieure au seuil de probabilité prédéterminé.

Selon un aspect pratique pour un traitement en temps réel dès qu'une prédiction est obtenue la donnée la plus ancienne collectée au sein du tampon est supprimée pour permettre la collecte d'une donnée suivant la donnée la plus récente collectée au sein du tampon et les étapes 64 à 68 sont alors réitérées et ainsi de suite.

Autrement dit, au cours de la phase B opérationnelle 42 de prédiction d'engorgement(s) mise en oeuvre en temps réel par l'unité 14 de prédiction d'engorgement(s) les données du flux de données courant sont traitées de manière similaire à ce qui est effectué lors la phase de construction et d'entrainement 40 d'un modèle M d'apprentissage automatique avec des données préalablement collectées afin que le modèle M d'apprentissage soit tout aussi performant en bénéficiant d'un ensemble courant de données à traiter correspondant à un ensemble courant de données épurées, classées, synchronisées et enrichi.

On conçoit ainsi que le procédé de prédiction d'engorgement(s) d'au moins une colonne de distillation d'une raffinerie selon l'invention permet spécifiquement de diagnostiquer à l'avance le risque d'engorgement des colonnes de distillation de raffinerie en temps réel. Avec cette approche, il est possible de fournir une alerte précoce à un opérateur de colonne(s) de distillation d'une raffinerie puisqu'un pré-engorgement de ladite ou desdites colonne(s) de distillation d'une raffinerie est détecté et non un engorgement en tant que tel, ce qui lui permet de réagir avant que l'engorgement ne se produise et soit source de fuite ou à tout le moins de perte de rendement de la colonne de distillation et permet de réduire le temps d'arrêt de la colonne de distillation susceptible d'engorgement ainsi que la sécurité du processus de distillation associé

Par rapport au document US 2018/275690 A1 qui divulgue notamment que les performances de la raffinerie, ou d'une unité de la raffinerie sont comparées aux performances prédites par un ou plusieurs modèles de processus pour identifier des différences ou les lacunes de fonctionnement, la présente invention propose une solution temporellement en amont de la présence d'un dysfonctionnement correspondant à l'engorgement en tant que tel de colonne(s) de distillation d'une raffinerie.

La solution selon la présente invention permet ainsi d'éviter une perte de performance, nécessaire à la détection selon le document US 2018/275690 A1, d'un dysfonctionnement global de la raffinerie, sans localisation précise de la cause d'un tel dysfonctionnement ni détection locale d'un engorgement de colonne(s) de distillation de la raffinerie, et encore moins d'un pré-engorgement de colonne(s) de distillation de la raffinerie.

## Revendications

1. Procédé (38) de prédiction d'engorgement(s) d'au moins une colonne de distillation d'une raffinerie mis en oeuvre par apprentissage automatique, le procédé comprenant :
- une phase de construction et d'entrainement (40) d'un modèle d'apprentissage automatique de prédiction d'engorgement(s) obtenu à partir d'un ensemble de données préalablement collectées, au cours d'une période préalable prédéterminée, et au moins à partir d'un ensemble de capteurs de la raffinerie, comprenant des capteurs adaptés à mesurer plusieurs types de données au sein de la colonne de distillation considérée, chaque donnée collectée étant associée à une donnée temporelle de capture,
- une phase opérationnelle (42) de prédiction d'engorgement(s) comprenant les étapes suivantes :
- à partir dudit ensemble de capteurs de la raffinerie, collecte (56) d'un flux de données courant jusqu'à remplissage d'un tampon de données de taille prédéterminée, chaque donnée du flux de données courant étant également associée à une donnée temporelle de capture,
- prétraitement (64) des données du tampon de données par épuration et classification prédéterminées délivrant un ensemble courant de données épurées et classées,
- synchronisation (66) des données temporelles de capture associées aux données du flux de données courant collecté de l'ensemble courant de données épurées et classées, délivrant un ensemble courant de données épurées, classées et synchronisées,
- à partir de l'ensemble courant de données épurées, classées et synchronisées, détermination (70) d'au moins une valeur de variable courante représentative d'au moins une performance courante de ladite au moins une colonne de distillation, et ajout de ladite au moins une valeur de variable à l'ensemble courant de données épurées, classées et synchronisées pour former un ensemble courant de données à traiter,
- formation (72) d'un ensemble courant de données transformées par calcul de dérivées prédéterminées de l'ensemble courant de données à traiter,
- prédiction (74) de l'état courant de ladite au moins une colonne de distillation par application dudit modèle d'apprentissage audit ensemble courant de données transformées, ledit état courant correspondant à une valeur binaire représentative de la présence ou absence d'un pré-engorgement courant.

2. Procédé (38) de prédiction selon la revendication 1, dans lequel la phase (40) de construction et d'entrainement d'un modèle d'apprentissage automatique de prédiction d'engorgement(s) comprend les étapes suivantes :
- prétraitement (44) de l'ensemble de données préalablement collectées par épuration et classification prédéterminées délivrant un ensemble préalable de données épurées et classées,
- synchronisation (46) des données temporelles de capture associées aux données collectées de l'ensemble préalable de données épurées et classées, délivrant un ensemble préalable de données épurées, classées et synchronisées,
- à partir de l'ensemble préalable de données épurées, classées et synchronisées, détermination (48) d'au moins une valeur de variable représentative d'au moins une performance préalable de ladite au moins une colonne de distillation, et ajout de ladite au moins une valeur de variable à l'ensemble préalable de données épurées, classées et synchronisées pour former un ensemble de données préalable à traiter,
- régression (50) dudit modèle d'apprentissage, par calcul et filtrage de dérivées prédéterminées de l'ensemble de données préalable à traiter, formant deux classes résultantes dudit modèle d'apprentissage respectivement associées à un fonctionnement normal de ladite au moins une colonne de distillation et à un pré-engorgement de ladite au moins une colonne de distillation,
- ré-échantillonnage (52) desdites deux classes résultantes dudit modèle d'apprentissage selon un taux d'échantillonnage prédéterminé,
- détermination, entrainement et validation (54) dudit modèle d'apprentissage en utilisant l'ensemble des échantillons issus de l'étape de ré-échantillonnage.

3. Procédé (38) de prédiction selon la revendication 2, dans lequel la synchronisation (46, 66) mise en oeuvre au sein de la phase de construction et d'entrainement d'un modèle d'apprentissage automatique de prédiction d'engorgement(s) et/ou mise en oeuvre au sein de la phase opérationnelle de prédiction d'engorgement(s) comprend l'application (47, 68) de décalage(s) temporel(s) déterminé(s) en fonction de la position de chaque capteur dudit ensemble de capteurs.

4. Procédé (38) de prédiction selon l'une quelconque des revendications précédentes dans lequel le modèle d'apprentissage est un modèle de forêts aléatoires comprenant un nombre d'estimateurs prédéterminé, et une profondeur maximale configurée pour étendre chaque noeud de la forêt aléatoire jusqu'à ce que toutes les feuilles soient pures ou jusqu'à ce que toutes les feuilles contiennent moins de deux échantillons.

5. Procédé (38) de prédiction selon l'une quelconque des revendications précédentes 2 à 4 dans lequel la variable courante représentative d'au moins une performance courante et/ou la variable représentative d'au moins une performance préalable sont de type appartenant au groupe comprenant au moins :
- une variation de débit brut au sein de ladite au moins une colonne de distillation,
- une caractéristique d'engorgement correspondant à l'écart entre une consigne prédéterminée de débit de reflux et un débit de reflux mesuré et collecté au cours d'une étape de collecte de données associée à la phase opérationnelle ou à la phase de construction,
- un indicateur de recirculation supérieure de ladite au moins une colonne de distillation correspondant au ratio du rapport liquide-vapeur sur le rapport de reflux du plateau d'aspiration, le rapport liquide-vapeur et le rapport de reflux étant mesuré et collecté au cours d'une étape de collecte de données associée à la phase opérationnelle ou à la phase de construction,
- un indicateur de risque déterminé au moins à partir de données de température et de pression de ladite au moins une colonne de distillation mesurées et collectées au cours d'une étape de collecte de données associée à la phase opérationnelle ou à la phase de construction,
- un indicateur d'engorgement obtenu à partir d'équations théoriques prédéterminées et un indicateur binaire associé,
- un ensemble d'écarts et de rapports de température prédéterminés obtenus à partir d'au moins deux capteurs dudit ensemble de capteurs localisés en des positions distinctes par rapport à la position de ladite au moins une colonne de distillation,
- un bilan de matière,
- une enthalpie.

6. Procédé (38) de prédiction selon l'une quelconque des revendications précédentes, dans lequel l'étape de prédiction (74) associe à la valeur binaire une probabilité et dans lequel le procédé comprend en outre, après prédiction de l'état courant de ladite au moins une colonne de distillation, une étape de génération et de restitution d'alerte (78) à au moins un opérateur localisé au sein de la raffinerie, en cas d'obtention au cours de l'étape de prédiction d'une valeur binaire représentative de la présence d'un pré-engorgement courant avec une valeur de probabilité associée supérieure à un seuil de probabilité prédéterminé.

7. Procédé (38) de prédiction selon l'une quelconque des revendications précédentes comprenant en outre une étape de stockage (62) des données du flux de données courant au sein de l'ensemble de données préalablement collectées pour une itération ultérieure de la phase de construction et d'entrainement du modèle d'apprentissage automatique de prédiction d'engorgement(s), mettant à jour ledit modèle d'apprentissage automatique pour une itération ultérieure de ladite phase opérationnelle de prédiction.

8. Procédé (38) de prédiction selon l'une quelconque des revendications précédentes, comprenant une étape de compression (58) mise en oeuvre lors de la collecte d'un flux de données courant avec un taux de compression prédéterminé et une étape de vérification du maintien dudit taux de compression à chaque étape de collecte ultérieure.

9. Programme d'ordinateur comportant des instructions logicielles qui lorsqu'elles sont exécutées par un ordinateur, mettent en oeuvre un procédé de prédiction selon l'une quelconque des revendications précédentes.

10. Système (10) de prédiction d'engorgement(s) d'au moins une colonne de distillation d'une raffinerie mis en oeuvre par apprentissage automatique, le système comprenant au moins une base de donnée, **caractérisé en ce qu'**il comprend en outre :
- une unité de construction et d'entrainement (12) préalables d'un modèle d'apprentissage automatique de prédiction d'engorgement(s) obtenu à partir d'un ensemble de données préalablement collectées stocké au sein de ladite base de donnée, au cours d'une période préalable prédéterminée, et au moins à partir d'un ensemble de capteurs de la raffinerie, comprenant des capteurs adaptés à mesurer plusieurs types de données au sein de la colonne de distillation considérée, chaque donnée collectée étant associée à une donnée temporelle de capture,
- une unité de prédiction d'engorgement(s) (14_{A}, 14_{B}) comprenant :
- un tampon de données de taille prédéterminée et un module de collecte (16) configuré pour collecter, à partir dudit ensemble de capteurs de la raffinerie, un flux de données courant jusqu'à remplissage dudit tampon de données de taille prédéterminée, chaque donnée du flux de données courant étant également associée à une donnée temporelle de capture,
- un module de prétraitement (20) configuré pour prétraiter les données du tampon de données par épuration et classification prédéterminées délivrant un ensemble courant de données épurées et classées,
- un module de synchronisation (22) configuré pour synchroniser les données temporelles de capture associées aux données du flux de données courant collecté de l'ensemble courant de données épurées et classées, délivrant un ensemble courant de données épurées, classées et synchronisées
- un module de détermination (24) configuré pour déterminer, à partir de l'ensemble courant de données épurées, classées et synchronisées, au moins une valeur de variable courante représentative d'au moins une performance courante de ladite au moins une colonne de distillation, et pour ajouter ladite au moins une valeur de variable à l'ensemble courant de données épurées, classées et synchronisées pour former un ensemble courant de données à traiter,
- un module de formation (26) configuré pour former un ensemble courant de données transformées par calcul de dérivées prédéterminées de l'ensemble courant de données à traiter,
- un module de prédiction (28) configuré pour prédire l'état courant de ladite au moins une colonne de distillation par application dudit modèle d'apprentissage audit ensemble courant de données transformées, ledit état courant correspondant à une valeur binaire représentative de la présence ou absence d'un pré-engorgement courant.

11. Système (10) de prédiction d'engorgement(s) selon la revendication 10 dans lequel :
- le module de collecte (16) est localisé au sein même de la raffinerie, et
- l'unité de construction et d'entrainement (12) préalables d'un modèle d'apprentissage automatique de prédiction d'engorgement(s), le tampon de donnée, le module de prétraitement, le module de synchronisation, le module de détermination, le module de formation et le module de prédiction de l'unité de prédiction d'engorgement(s), sont externes à la raffinerie et organisés en informatique en nuage,
le module de collecte (16) étant en outre propre à charger directement le tampon de donnée, le système de prédiction comprenant en outre un module de réception propre à recevoir une information représentative de la prédiction de l'état courant de ladite au moins une colonne de distillation et restituable via un moyen de restitution dudit système de prédiction à au moins un opérateur présent au sein de la raffinerie.

## Patentansprüche

1. Verfahren (38) zur Vorhersage von Verstopfung(en) in mindestens einer Destillationskolonne einer Raffinerie, das durch maschinelles Lernen implementiert wird, wobei das Verfahren umfasst:
- eine Bau- und Trainingsphase (40) eines maschinellen Lernmodells zur Vorhersage von Verstopfung(en), das aus einem Satz zuvor gesammelter Daten im Laufe einer vorbestimmten Vorperiode erhalten wird und zumindest aus einem Satz von Sensoren der Raffinerie, die Sensoren umfassen, die geeignet sind, mehrere Arten von Daten innerhalb der betrachteten Destillationskolonne zu messen, wobei jeder erfasste Datenwert mit einem zeitlichen Erfassungsdatenwert verbunden ist,
- eine Betriebsphase (42) zur Vorhersage von Verstopfung(en), die die folgenden Schritte umfasst:
- von dem Satz von Sensoren der Raffinerie, Erfassen (56) eines aktuellen Datenstroms, bis ein Datenpuffer mit einer vorbestimmten Größe gefüllt ist, wobei jedes Datum des aktuellen Datenstroms auch mit einem zeitlichen Erfassungsdatenwert verbunden ist,
- Vorverarbeitung (64) der Daten aus dem Datenpuffer durch vorbestimmte Bereinigung und Klassifizierung, die einen aktuellen Satz bereinigter und klassifizierter Daten ausgibt,
- Synchronisieren (66) der Erfassungszeitdaten, die mit den Daten des erfassten aktuellen Datenstroms des aktuellen Satzes bereinigter und klassifizierter Daten verknüpft sind, wobei ein aktueller Satz bereinigter, klassifizierter und synchronisierter Daten ausgegeben wird,
- aus dem aktuellen Satz von bereinigten, klassifizierten und synchronisierten Daten, Bestimmen (70) mindestens eines aktuellen Variablenwerts, der mindestens eine aktuelle Leistung der mindestens einen Destillationskolonne repräsentiert und Hinzufügen des mindestens einen Variablenwerts zu dem aktuellen Satz von gereinigten, klassifizierten und synchronisierten Daten, um einen aktuellen Satz von zu verarbeitenden Daten zu bilden,
- Bildung (72) eines aktuellen Satzes von transformierten Daten durch Berechnung von vorbestimmten Ableitungen des aktuellen Satzes von zu verarbeitenden Daten,
- Vorhersage (74) des aktuellen Zustands der mindestens einen Destillationskolonne durch Anwendung des Lernmodells auf den aktuellen Satz transformierter Daten, wobei der aktuelle Zustand einem binären Wert entspricht, der für das Vorhandensein oder Nichtvorhandensein einer aktuellen Vorverstopfung repräsentativ ist.

2. Verfahren (38) zur Vorhersage nach Anspruch 1, wobei die Phase (40) des Aufbaus und Trainings eines maschinellen Lernmodells zur Vorhersage von Verstopfung(en) die folgenden Schritte umfasst:
- Vorverarbeitung (44) des zuvor erfassten Datensatzes durch vorbestimmte Bereinigung und Klassifizierung, die einen vorherigen Satz bereinigter und klassifizierter Daten ausgibt,
- Synchronisieren (46) der Erfassungszeitdaten, die mit den erfassten Daten des vorherigen Satzes von bereinigten und klassifizierten Daten verknüpft sind, wodurch ein vorheriger Satz von bereinigten, klassifizierten und synchronisierten Daten ausgegeben wird,
- Bestimmen (48) von mindestens einem Variablenwert, der für mindestens eine vorhersehbare Leistung der mindestens einen Destillationskolonne repräsentativ ist, aus dem bereinigten, klassifizierten und synchronisierten Vordatensatz und Hinzufügen des mindestens einen Variablenwerts zu dem vorherigen Satz von bereinigten, klassifizierten und synchronisierten Daten, um einen vorherigen Satz von zu verarbeitenden Daten zu bilden,
- Rückentwicklung (50) des Lernmodells durch Berechnen und Filtern von vorbestimmten Ableitungen des zu verarbeitenden Vordatensatzes, die zwei Klassen bilden, die sich aus dem Vordatensatz ergeben, die jeweils mit einem normalen Betrieb der mindestens einen Destillationskolonne und mit einer Vorverstopfung der mindestens einen Destillationskolonne verbunden sind,
- Resampling (52) der beiden resultierenden Klassen des Lernmodells mit einer vorbestimmten Abtastrate,
- Bestimmen, Trainieren und Validieren (54) des Lernmodells unter Verwendung aller Abtastungen aus dem Resampling-Schritt.

3. Verfahren (38) zur Vorhersage nach Anspruch 2, wobei das Synchronisieren (46, 66), das in der Bau- und Trainingsphase eines maschinellen Lernmodells für die Vorhersage von Verstopfung(en) implementiert wird und in der Betriebsphase für die Vorhersage von Verstopfung(en) implementiert wird die Anwendung (47, 68) einer oder mehrerer Zeitverschiebungen umfasst, die in Abhängigkeit von der Position jedes Sensors des Satzes von Sensoren bestimmt werden.

4. Verfahren (38) zur Vorhersage nach einem der vorhergehenden Ansprüche, wobei das Lernmodell ein Zufallswaldmodell ist, das eine vorbestimmte Anzahl von Schätzern umfasst, und eine maximale Tiefe, die so konfiguriert ist, dass sie jeden Knoten des Zufallswaldes erweitert, bis alle Blätter rein sind oder bis alle Blätter weniger als zwei Stichproben enthalten.

5. Verfahren (38) zur Vorhersage nach einem der vorhergehenden Ansprüche 2 bis 4, bei dem die aktuelle Variable, die für mindestens eine aktuelle Leistung repräsentativ ist, und/oder die Variable, die für mindestens eine vorherige Leistung repräsentativ ist, von einem Typ sind, der zu der Gruppe gehört, die mindestens umfasst:
- eine Änderung des Bruttodurchflusses innerhalb der mindestens einen Destillationskolonne,
- eine Verstopfungscharakteristik, die der Abweichung zwischen einem vorbestimmten Sollwert der Rückflussrate und einer Rückflussrate entspricht, die während eines Datenerfassungsschritts gemessen und erfasst wird, der mit der Betriebsphase oder der Bauphase verbunden ist,
- einen oberen Rezirkulationsindikator der mindestens einen Destillationskolonne, der dem Verhältnis des Flüssigkeits-Dampf-Verhältnisses zum Rückflussverhältnis des Saugbodens entspricht, wobei das Flüssigkeits-Dampf-Verhältnis und das Rückflussverhältnis in einem mit der Betriebsphase oder der Bauphase verbundenen Datenerfassungsschritt gemessen und erfasst werden,
- einen Risikoindikator, der zumindest aus Temperatur- und Druckdaten der mindestens einen Destillationskolonne bestimmt wird, die während eines mit der Betriebsphase oder der Bauphase verbundenen Datenerfassungsschritts gemessen und erfasst werden,
- einen aus vorgegebenen theoretischen Gleichungen abgeleiteten Verstopfungsindikator und einen zugehörigen binären Indikator,
- einen Satz von vorbestimmten Temperaturabweichungen und -verhältnissen, die von mindestens zwei Sensoren des Satzes von Sensoren erhalten werden, die an unterschiedlichen Positionen in Bezug auf die Position der mindestens einen Destillationskolonne lokalisiert sind,
- eine Stoffbilanz,
- eine Enthalpie.

6. Verfahren (38) zur Vorhersage nach einem der vorhergehenden Ansprüche, wobei der Vorhersageschritt (74) dem Binärwert eine Wahrscheinlichkeit zuordnet, und wobei das Verfahren außerdem nach der Vorhersage des aktuellen Zustands der mindestens einen Destillationskolonne einen Schritt zur Erzeugung und Wiedergabe einer Warnung (78) an mindestens einen in der Raffinerie lokalisierten Bediener umfasst, falls im Verlauf des Vorhersageschritts ein binärer Wert erhalten wird, der das Vorhandensein einer aktuellen Vorverstopfung mit einem zugehörigen Wahrscheinlichkeitswert repräsentiert, der eine vorbestimmte Wahrscheinlichkeitsschwelle überschreitet.

7. Verfahren (38) zur Vorhersage nach einem der vorhergehenden Ansprüche, das außerdem einen Schritt des Speicherns (62) der Daten des aktuellen Datenstroms innerhalb des zuvor erfassten Datensatzes für eine spätere Iteration der Bau- und Trainingsphase des maschinellen Lernmodells zur Vorhersage von Verstopfung(en) umfasst, wobei das maschinelle Lernmodell für eine spätere Iteration der betrieblichen Vorhersagephase aktualisiert wird.

8. Verfahren (38) zur Vorhersage nach einem der vorhergehenden Ansprüche, umfassend einen Komprimierungsschritt (58), der beim Erfassen eines aktuellen Datenstroms mit einer vorbestimmten Kompressionsrate implementiert wird, und einen Schritt, bei dem überprüft wird, ob die Kompressionsrate bei jedem nachfolgenden Erfassungsschritt beibehalten wird.

9. Computerprogramm mit Softwareanweisungen, die, wenn sie von einem Computer ausgeführt werden, ein Vorhersageverfahren nach einem der vorherigen Ansprüche implementieren.

10. System (10) zur Vorhersage von Verstopfung(en) in mindestens einer Destillationskolonne einer Raffinerie, das durch maschinelles Lernen implementiert wird, wobei das System mindestens eine Datenbank umfasst, **dadurch gekennzeichnet, dass** es ferner umfasst:
- eine Einheit (12) zum vorherigen Aufbau und Training eines maschinellen Lernmodells zur Vorhersage von Verstopfung(en), das aus einem Satz vorher erfasster Daten erhalten wird, die in der Datenbank gespeichert sind, während einer bestimmten vorherigen Periode, und mindestens aus einer Reihe von Sensoren der Raffinerie zu denen Sensoren gehören, die mehrere Arten von Daten innerhalb der betrachteten Destillationskolonne messen können, wobei jeder erfasste Datenwert mit einem zeitlichen Erfassungsdatenwert verknüpft ist,
- eine Einheit zur Vorhersage von Verstopfung(en) (14_{A}, 14_{B}), umfassend:
- einen Datenpuffer vorbestimmter Größe und ein Erfassungsmodul (16), das so konfiguriert ist, dass es von dem Satz von Raffinerie-Sensoren einen laufenden Datenstrom erfasst, bis der Datenpuffer mit vorbestimmter Größe gefüllt ist, wobei jeder Datenwert des aktuellen Datenstroms auch mit einem zeitlichen Erfassungsdatenwert verknüpft ist,
- ein Vorverarbeitungsmodul (20), das so konfiguriert ist, dass es die Daten des Datenpuffers durch vorbestimmte Bereinigung und Klassifizierung vorverarbeitet, wodurch ein aktueller Satz bereinigter und klassifizierter Daten ausgegeben wird,
- ein Synchronisationsmodul (22), das so konfiguriert ist, dass es die Erfassungszeitdaten synchronisiert, die den Daten des aktuellen Datenstroms zugeordnet sind, der aus dem aktuellen Satz bereinigter und klassifizierter Daten gesammelt wurde, und einen aktuellen Satz bereinigter, klassifizierter und synchronisierter Daten ausgibt,
- ein Bestimmungsmodul (24), das so konfiguriert ist, dass es aus dem aktuellen Satz von bereinigten, klassifizierten und synchronisierten Daten mindestens einen aktuellen Variablenwert bestimmt, der mindestens eine aktuelle Leistung der mindestens einen Destillationskolonne repräsentiert, und den mindestens einen Variablenwert zu dem aktuellen Satz von gereinigten, klassifizierten und synchronisierten Daten hinzufügt, um einen aktuellen Satz von zu verarbeitenden Daten zu bilden,
- ein Trainingsmodul (26), das so konfiguriert ist, dass es einen aktuellen Satz von transformierten Daten bildet, indem es vorbestimmte Ableitungen des aktuellen Satzes von zu verarbeitenden Daten berechnet,
- ein Vorhersagemodul (28), das so konfiguriert ist, dass es den aktuellen Zustand der mindestens einen Destillationskolonne durch Anwendung des Lernmodells auf den aktuellen Satz transformierter Daten vorhersagt, wobei der aktuelle Zustand einem binären Wert entspricht, der für das Vorhandensein oder Nichtvorhandensein einer aktuellen Vorverstopfung repräsentativ ist.

11. System (10) zur Vorhersage von Verstopfung(en) nach Anspruch 10, wobei:
- das Erfassungsmodul (16) innerhalb der Raffinerie lokalisiert ist, und
- die vorherige Konstruktions- und Trainingseinheit (12) eines maschinellen Lernmodells zur Vorhersage von Verstopfung(en), der Datenpuffer, das Vorverarbeitungsmodul, das Synchronisationsmodul, das Bestimmungsmodul, das Trainingsmodul und das Vorhersagemodul der Verstopfungsvorhersageeinheit außerhalb der Raffinerie und als Cloud-Computing organisiert sind,
wobei das Erfassungsmodul (16) außerdem geeignet ist, den Datenpuffer direkt zu laden, wobei das Vorhersagesystem außerdem ein Empfangsmodul umfasst, das geeignet ist, eine Information zu empfangen, die eine Vorhersage des aktuellen Zustands der mindestens einen Destillationskolonne enthält und die über ein Mittel zur Wiedergabe des Vorhersagesystems an mindestens einen in der Raffinerie anwesenden Bediener zurückgegeben werden kann.

## Claims

1. A method (38) for predicting flooding in at least one distillation column of a refinery, as implemented by machine learning, the method comprising:
- a constructing and training phase (40) of a machine learning model for predicting flooding, as obtained from a set of data collected beforehand, during a predetermined prior period, and at least from a set of sensors of the refinery, comprising sensors adapted to measure a plurality types of data within the distillation column considered, each collected datum being associated with a sensor time datum,
- an operational phase (42) for predicting flooding comprising the following steps:
- from said set of sensors of the refinery, collecting (56) a current data flow until a data buffer of predetermined size is filled, each datum of the current data flow being further associated with a sensor time datum,
- pre-processing (64) the data from the data buffer by predetermined cleansing and classification delivering a current set of clean and classified data,
- synchronizing (66) the sensor time data associated with the data of the current collected data flow of the current set of clean and classified data, delivering a current set of clean, classified and synchronized data,
- from the current set of clean, classified and synchronized data, determining (70) at least one current value of a variable representative of at least one current performance of the at least one distillation column, and adding the at least one value of the variable to the current set of clean, classified and synchronized data so as to form a current set of data to be processed,
- forming (72) a current set of transformed data by calculating predetermined derivatives of the current set of data to be processed,
- predicting (74) the current state of said at least one distillation column by applying said learning model to said current set of transformed data, said current state corresponding to a binary value representative of either the presence or the absence of a current pre-flooding.

2. The prediction method (38) according to claim 1, wherein the phase (40) of constructing and training a machine learning model for predicting flooding comprises the following steps:
- pre-processing (44) the set of data collected beforehand by pre-determined cleansing and classification which delivers a preliminary set of clean and classified data,
- synchronizing (46) the sensor time data associated with the collected data of the preliminary set of clean and classified data, delivering a preliminary set of clean, classified and synchronized data,
- from the preliminary set of clean, classified and synchronized data, determining (48) at least one value of a variable representative of at least one preliminary performance of said at least one distillation column, and adding said at least one value of the variable to the preliminary set of clean, classified and synchronized data so as to form a preliminary set of data to be processed,
- performing regression (50) on said learning model, by calculating and filtering predetermined derivatives of the preliminary set of data to be processed, forming two classes resulting from said learning model associated with normal operation of said at least one distillation column and with a pre-flooding of said at least one distillation column, respectively,
- resampling (52) said two classes resulting from said learning model at a predetermined sampling rate,
- determining, training and validating (54) said learning model using all the samples coming from the resampling step.

3. The prediction method (38) according to claim 2, wherein the synchronization (46, 66) implemented within the constructing and training phase of a machine learning model for predicting flooding and/or implemented within the flooding prediction operational phase, comprises applying (47, 68) time lag(s) determined as a function of the position of each sensor of said set of sensors.

4. The prediction method (38) according to any of the preceding claims, wherein the learning model is a random forest model comprising a predetermined number of estimators, and a maximum depth configured for extending each node of the random forest until all leaves are pure or until all leaves contain less than two samples.

5. The prediction method (38) according to any of the preceding claims 2 to 4, wherein the current variable representative of at least one current performance and/or the variable representative of at least one prior performance are of the type belonging to the group comprising at least:
- a variation in the gross flow-rate within the at least one distillation column,
- a flooding characteristic corresponding to the difference between a predetermined reflux flow-rate setpoint and a reflux flow-rate measured and collected during a data collection step associated with the operational phase or the construction phase,
- an upper recirculation indicator of the at least one distillation column corresponding to the ratio of the liquid-vapor ratio to the reflux ratio of the draw tray, the liquid-vapor ratio and the reflux ratio being measured and collected during a data collection step associated with the operational phase or with the construction phase,
- a risk indicator determined at least from temperature and pressure data of the at least one distillation column measured and collected during a data collection step associated with the operational phase or the construction phase,
- a flooding indicator obtained from predetermined theoretical equations and an associated binary indicator,
- a set of predetermined temperature differences and ratios obtained from at least two sensors of said set of sensors located at distinct positions with respect to the position of said at least one distillation column,
- a material balance,
- an enthalpy.

6. The prediction method (38) according to any preceding claim, wherein the prediction step (74) associates a probability with the binary value and wherein the method further comprises, after predicting the current state of said at least one distillation column, a step of generating and returning an alert (78) to at least one operator located within the refinery, in the event of obtaining a binary value representative of the presence of a current pre-flooding with an associated probability value greater than a predetermined probability threshold, during the prediction step.

7. The prediction method (38) according to any of the preceding claims, further comprising the step of storing (62) the data of the current data flow within the set of data collected beforehand for a subsequent iteration of the constructing and training phase of the machine learning model for predicting flooding, updating said machine learning model for a subsequent iteration of said prediction operational phase.

8. The prediction method (38) according to any of the preceding claims, comprising a compression step (58) implemented during the collection of a current data flow with a predetermined compression ratio and a step of verifying that said compression ratio is maintained at each subsequent collection step.

9. A computer program comprising software instructions which, when executed by a computer, implement a prediction method according to any of the preceding claims.

10. A system (10) for predicting flooding in at least one distillation column of a refinery, as implemented by machine learning, the system comprising at least one database, **characterized in that** same further comprises:
- a unit (12) for the preliminary construction and training of a machine learning model for predicting flooding obtained from data collected beforehand and stored within said database, during a predetermined prior period, and at least from a set of sensors of the refinery, comprising sensors adapted to measure a plurality types of data within the distillation column considered, each datum collected being associated with a sensor time datum,
- a flooding prediction unit (14_{A}, 14_{B}) comprising:
- a data buffer of predetermined size and a collection module (16) configured for collecting, from said set of sensors of the refinery, a current data flow until said data buffer of predetermined size is filled, each datum of the current data flow being further associated with a sensor time datum,
- a pre-processing module (20) configured for pre-processing the data from the data buffer by predetermined cleansing and classification delivering a current set of clean and classified data,
- a synchronization module (22) configured for synchronizing the sensor time data associated with the data of the current collected data flow of the current set of clean and classified data, which delivers a current set of clean, classified and synchronized data
- a determination module (24) configured for determining, from the current set of clean, classified and synchronized data, at least one current value of a variable representative of at least one current performance of said at least one distillation column, and for adding the at least one value of the variable to the current set of clean, classified and synchronized data so as to form a current set of data to be processed,
- a formation module (26) configured for forming a current set of transformed data by calculating predetermined derivatives of the current set of data to be processed,
- a prediction module (28) configured for predicting the current state of said at least one distillation column by applying said learning model to said current set of transformed data, said current state corresponding to a binary value representative of either the presence or the absence of a current pre-flooding.

11. The flooding prediction system (10) according to claim 10 wherein:
- the collection module (16) is located within the refinery itself, and
- the unit (12) for the preliminary construction and training of a machine learning model for predicting flooding, the data buffer, the preprocessing module, the synchronization module, the determination module, the formation module and the prediction module of the flooding prediction unit, are external to the refinery and organized in cloud computing,
the collection module (16) is further apt to directly load the data buffer, the prediction system further comprising a reception module configured to receive information representative of the prediction of the current state of said at least one distillation column and apt to be being returned to at least one operator present within the refinery, via a means of returning of said prediction system.
